# EUROPEAN PATENT SPECIFICATION

(11) **EP 3 181 532 B1**
(45) Date of publication and mention of the grant of the patent: **27.02.2019**
(21) Application number: 15201363.7
(22) Date of filing: 18.12.2015
(51) Int. Cl.: C03C 17/00

(54) **WATERBORNE TWO-COMPONENT ANTI-REFLECTIVE COATING COMPOSITION PRECURSOR FOR SOLAR GLASS**
WASSERBASIERTER ZWEIKOMPONENTIGER PRÄKURSOR FÜR EINE ANTIREFLEXBESCHICHTUNG FÜR SOLARGLAS
PRÉCURSEUR À DEUX COMPOSANTS À BASE D'EAU POUR UN REVÊTEMENT ANTIREFLET POUR VERRE SOLAIRE

(43) Date of publication of application: 21.06.2017
(73) Proprietor: 3M Innovative Properties Company, Saint Paul, MN 55133-3427 (US)
(72) Inventor: Kühneweg, Bernd, 40468 Duesseldorf (DE)
(74) Representative: Müller, Bruno

(56) References cited:
- CN-A- 102 584 024
- CN-A- 104 514 179
- US-A1- 2006 093 786

## Description

### Field

The disclosure relates to a two component anti-reflective coating composition precursor. In another aspect, the present disclosure relates to a method for coating a substrate. In still a further aspect, the present disclosure relates to the use of such coating composition precursor.

### Background

It has been known since the 1940s that nanoparticles may be used to obtain antireflective coatings (US 2,432,484). The optical function of such an antireflective coating is generally achieved by the effective refractive index of the coating being lower than that of the substrate. This leads to a gradient of the refractive index of air to the refractive index of the substrate. Thus, the amount of light reflected from the coated substrate is reduced.

CN 104,514,179 A discloses a coating composition comprising silica nano particles; polyacrylic acid as first and second acid, polyvinyl acetat latex polymer particles; polyvinyl acolhol and calcium carborate metal salt.

US 2006/0,093,786 A1 discloses an anti-reflective coating composition precursor comprising silica nano-particles; nitric acid as a first and second acid; and calcium chlorid salt.

Presently, antireflective coatings for glass based on SiO₂ nanoparticles are sintered at temperatures above 500 °C in order to achieve a coating which is mechanically stable for longer terms. That is, an antireflective coating is applied at the glass manufacturer before the glass pane is entered into a tempering oven running at a temperature above 500 °C. Thus, tempering of the glass and curing or sintering the antireflective coating takes place at the same time.

Moreover, it is desirable that anti-reflective coatings on e.g. solar panels fulfil certain further criteria in addition to their anti-reflective properties such as a certain mechanical and/or chemical resistance. In addition, from the standpoint of processability and because of economical and/or ecological considerations, it is desirable that an anti-reflective coating composition should exhibit a long shelf-life, i.e. the ability of being able to be stored for a certain period of time and still be able to be processed.

### Summary

In one aspect of the present disclosure, there is provided an antireflective coating composition precursor comprising:
(a) a first part (A) comprising:
   (i) silica nanoparticles in an amount in the range of from 50 to 99 wt.-%, preferably in the range of from 70 to 85 wt.-%, relative to the total weight of the solid contents of the first part of the precursor;
   (ii) a first acid in such an amount that the first part of the precursor exhibits a pH in the range of from 1.5 to 5.5, preferably in the range of from 2 to 3;
   (iii) polymer particles in an amount in the range of from 1 to 50 wt.-%, preferably in the range of from 5 to 30 wt.-% of the solid contents of the first part of the precursor;
   (iv) at least one rheology modifier compound in an amount in the range of from 0.01 to 30 wt.-%, preferably in the range of from 2 to 20 wt.-%, relative to the total weight of the solid contents of the first part of the precursor;
   (v) water;
(b) a second part (B) comprising:
   (i) a second acid in such that the second part of the precursor exhibits a pH in the range of from 1.5 to 5.5, preferably in the range of from 2 to 3;
   (ii) at least one metal salt in an amount in the range of from 1 to 40 wt.-%, preferably in the range of from 5 to 20 wt.-%, relative to the total weight of the solid contents of the second part of the precursor;
   (iii) at least one rheology modifier compound in an amount in the range of from 0,1 to 30 wt.-%, preferably in from 2 to 20 wt.-%, relative to the total weight of the solid contents of the second part of the precursor;
   (iv) water;
wherein the at least one second acid is distinct from the at least one first acid and wherein the ratio of part (A) to part (B) is in the range of from 10:1 to 1:10, preferably in the range of from 5:1 to 1:5, more preferably in the range of from 2:1 to 1:2, even more preferably in the range of from 1.5:1 to 1:1.5.

In a further aspect of the present disclosure there is provided a method for coating a substrate, comprising the steps
(I) providing a substrate having at least one surface;
(II) providing the antireflective coating composition precursor as described herein;
(III) combining parts (A) and (B) of said antireflective coating composition precursor, thereby obtaining an antireflective coating composition;
(IV) coating the substrate with said antireflective coating composition on at least one surface, thereby obtaining a coating;
(V) curing the coating, thereby obtaining a coated substrate.

The present disclosure further provides a use of the two-component antireflective coating composition for improving the light transmission and/or the hydrophilicity of a solar glass panel, a greenhouse glass panel, a window, or structural glazing of buildings or vehicles.

### Detailed Description

As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

Unless explicitly stated otherwise, all embodiments of the present disclosure can be combined freely.

In the following, "antireflective coating composition precursor" and "coating composition precursor" may be used interchangeably. The same applies to "antireflective coating composition" and "coating composition".

The first aspect of the present disclosure is an antireflective coating composition precursor comprising:
(a) a first part (A) comprising:
   (i) silica nanoparticles in an amount in the range of from 50 to 99 wt.-%, preferably in the range of from 70 to 85 wt.-%, relative to the total weight of the solid contents of the first part of the precursor;
   (ii) a first acid in such an amount that the first part of the precursor exhibits a pH in the range of from 1.5 to 5.5, preferably in the range of from 2 to 3;
   (iii) polymer particles in an amount in the range of from 1 to 50 wt.-%, preferably in the range of from 5 to 30 wt.-% of the solid contents of the first part of the precursor;
   (iv) at least one rheology modifier compound in an amount in the range of from 0.01 to 30 wt.-%, preferably in the range of from 2 to 20 wt.-%, relative to the total weight of the solid contents of the first part of the precursor;
   (v) water;
(b) a second part (B) comprising:
   (i) a second acid in such that the second part of the precursor exhibits a pH in the range of from 1.5 to 5.5, preferably in the range of from 2 to 3;
   (ii) at least one metal salt in an amount in the range of from 1 to 40 wt.-%, preferably in the range of from 5 to 20 wt.-%, relative to the total weight of the solid contents of the second part of the precursor;
   (iii) at least one rheology modifier compound in an amount in the range of from 0,1 to 30 wt.-%, preferably in from 2 to 20 wt.-%, relative to the total weight of the solid contents of the second part of the precursor;
   (iv) water;
wherein the at least one second acid is distinct from the at least one first acid and wherein the ratio of part (A) to part (B) is in the range of from 10:1 to 1:10, preferably in the range of from 5:1 to 1:5, more preferably in the range of from 2:1 to 1:2, even more preferably in the range of from 1.5:1 to 1:1.5.

The coating composition precursor generally exhibits a particularly good shelf-life. "Shelf-life" as used within the present disclosure has the meaning commonly used in the art. That is, a good or long shelf-life corresponds to the ability of the coating composition precursor of being stored at ambient temperature for a prolonged period of time and still being able to being processed to a coating without any essential degradation. Coating compositions according to the state of the art may form agglomerations or precipitations of single or several components or may degrade due to chemical degradation of one or more components or due to chemical reactions between the components, all of which may lead to a loss of properties or even the partial or complete loss of processability. The coating composition precursor according to the present disclosure may at least partially avoid agglomeration or precipitation of its components or chemical degradation, thereby giving rise to the above-mentioned desirable prolonged shelf-life.

Accordingly, storing of the coating composition precursor according to the present disclosure at ambient conditions for a prolonged period of time may be possible. Combining and preferably mixing of part (A) and part (B) of said coating composition precursor yields an antireflective coating composition. That is, combining part (A) and (B) in order to obtain an antireflective coating composition may be done at convenience of the user in required quantities immediately before the envisaged application on a substrate such a glass or solar glass panel.

When coating the antireflective coating composition obtained from combining parts (A) and (B) of said coating composition precursor on a substrate, preferably glass, a coating may be obtained which may act as an antireflective coating. For example, when coated on a glass panel or sheet, the coating obtained from the coating composition may increase the transmission of light through the sheet or panel, and may further exhibit desirable properties such as a good resistance to abrasion and/or aging, and may even give rise to a high hydrophilicity.

Part (A) of the coating composition precursor comprises nanoparticles. The nanoparticles are silica nanoparticles. Silica nanoparticles comprise silicon dioxide, preferably comprise at least 90 wt.-% of silicon dioxide. The nanoparticles as considered herein are particles having a diameter of less than 1000 nm, more preferably of less than 500 nm, even more preferably of less than 350 nm. The sizes of the nanoparticles may be determined by spreading a dilute dispersion of the particles over a surface and measuring the sizes of individual particles by using microscopic techniques, preferably scanning electronic microscopy (SEM) or atomic force microscopy (AFM). Preferably, the average sizes are determined by measuring the sizes of at least 100 individual particles. The aspect ratio is the ratio between the length and the width of a particle. In case of elongated nanoparticles as considered herein the length is the largest distance between two points in the particle and the width is the largest diameter as measured perpendicular to the central axis of the particle. Both length and width are measured from the projection of the particles as observed under the microscope.

An example for hydrophilic spherical silica nanoparticles is Nalco 1115 (Nalco Inc.) comprising 15 % colloidal SiO₂. Part (A) of the coating composition precursor as described herein may also comprise elongated silica nanoparticles. Elongated nanoparticles as considered herein are nanoparticles which are generally non-spherical, i.e. wherein one diameter of the particle deviates from another diameter of the same particle. Generally, elongated nanoparticles have a larger aspect ratio than spherical nanoparticles, preferably in the range of from 1:2.5 to 1:20, more preferably in the range of from 1:4 to 1:7. An examples for hydrophilic elongated silica nanoparticles is Snowtex ST-OUP (Nissan Chemical) comprising 15 to 16 wt.-% amorphous SiO₂.

The silica nanoparticles used herein are preferably hydrophilic, i.e. they have a polar surface, or even a negative or positive surface charge, preferably a negative surface charge. The surface of the silica nanoparticles used herein is substantially not modified with organic compounds having reactive groups capable of crosslinking such as acrylates, methacrylates, vinylic species or epoxies. Moreover, the surface of the silica nanoparticles used herein is also not activated by means of surface modifying agents such as alkoxy silanes, alkoxy zirconates, alkoxy aluminates and the like. Accordingly, the coating composition according to the present disclosure has an advantageously easy processability, long shelf life, and provides coatings in a safe and easy manner which may exhibit a combination of desirable properties such as antireflective optical properties, mechanical properties such as abrasion resistance even after weathering conditions, and providing the substrate with an hydrophilic surface. Without wanting being bound to theory, it may be assumed that upon curing, the Si-OH groups present on the surface of the silica nanoparticles react with each other, thereby forming Si-O-Si bonds connecting different nanoparticles. Hence, it may be further assumed that this may form a network between the different nanoparticles. Furthermore, it may be assumed that Si-O-Si-bonds may be formed between the silica nanoparticles of the coating composition as described herein and a glass or ceramics substrate (which also comprise SiO₂ and may have Si-OH groups on its surface). Accordingly, a tight connection between coating and substrate may be obtained upon curing.

First part (A) of the coating composition precursor comprises a first acid and second part (B) of said coating composition precursor comprises a second acid. The at least one second acid is different from the at least one first acid. It is further preferred that the at least one first acid and the at least one second acid are each selected from inorganic acids and organic acids. With regard to a long shelf-life and mechanical properties of the final coating, inorganic acids are preferred. Preferably, the at least one first acid and the at least one second acid are each selected from hydrochloric acid, nitric acid, phosphoric acid and sulfonic acid, more preferably from hydrochloric acid, phosphoric acid and nitric acid. In a particular preferred case, the first acid is phosphoric acid and the second acid is nitric acid.

Part (A) of the coating composition precursor of the present disclosure may further comprise a polysilicate. The addition of a polysilicate to part (A) of the coating composition precursor may have the effect that the coatings obtained from said composition may exhibit enhanced and reproducible mechanical properties such as resistance towards abrasion. Preferably, the polysilicate is a polysilicate of the formula M₂(SiO₂)ₙO, wherein M is selected from Li, Na, K, preferably Li or Na, more preferably Li, and n is an integer between 2 and 15, preferably between 4 and 9. It is further preferred that the polysilicate is employed as solved in a solvent, preferably water. For example, a polysilicate of the general formula Li₂Si₅O₁₁ may be obtained from Sigma Aldrich as 20 % solution in water (CAS-Nr. 12627-14-4).

The part (A) of the coating composition precursor as described herein comprises polymer particles. This has the effect that a coating having antireflective properties may be obtained from coating composition precursor and in particular from the coating composition as described herein. Without wanting to being bound by any theory, it is believed that the polymer particles form core-shell structures with the silica nanoparticles, which in turn gives probably gives rise to the microstructure of the coating responsible for the antireflective optical properties. In this regard, it is preferred that the polymer particles comprise latex, more preferably urethane latex particles. Latex particles may be employed in the form of latex dispersions. Suitable latex dispersions are commercially available, e.g., from DSM under the trade designations Neorez or Neocryl.

Part (A) and part (B) of the coating composition precursor comprise at least one rheology modifier compound. This has the effect that the rheology of the coating composition precursor and, in particular, the coating composition obtained therefrom exhibits a rheology particularly suitable for industrial application such as by roller coater, spraying or doctor blade. Moreover, a smooth coating layer may be obtained, and shelf-life of the coating composition precursor as well as the optical properties of the coating obtained therefrom are not negatively affected. In this regard, it is preferred that the at least one rheology modifier compound is selected from polysaccharides, proteins and polyvinyl alcohols, preferably are selected from natural and modified polysaccharides, preferably polysaccharides selected from the list consisting of xanthan, carrageenan, pectin, gellan, diuthan, cellulose ethers such as carboxymethyl cellulose, methyl cellulose, ethyl cellulose and hydroxyethyl cellulose. The addition of at least such a rheology modifier compound may result in more even coatings obtained from the compositions, as well as in a better processability of the compositions, in particular when coating substrates by spraying or by doctor blade. Without wanting to be bound to theory, a more even coating may arise from an increase of the viscosity when drying. Examples for rheology modifier compounds which may be advantageously used in the coating compositions described herein are xanthan (available from Jungbunzlbauer) and Keltrol BT (available from CP Kelco).

Preferably, the coating composition precursor according to the present disclosure further comprises a solvent. A solvent will generally improve the processability of the coating compositions, e.g. to enable application of the coating composition to a substrate by using spraying, doctor blade or painting brush. Due to the nature of the ingredients of the coating composition, polar solvents are generally preferred. Preferably, the solvent comprises at least one solvent selected from the list consisting of alcohols and water, preferably comprises at least one alcohol and/or water, more preferably essentially consists of water. Examples for alcohols are ethanol, propanol, butanol, iso-butanol and tert-butanol, as well as mixtures thereof. For example, the solvent may consist of a mixture of ethanol and water. The ratio of ethanol and water may be adjusted to the compounds used, the selected method of application, the substrate, the drying method as well as price and time concerns. In this regard, it is more preferred to use water as solvent, wherein further minor amounts of alcohol such as ethanol may be contained. The use of water is particularly useful for applications as aftermarket supplementary coatings on solar panels and greenhouses, which can be manually applied by the user. Either or both part (A) and (B) may comprise said solvent, however, it is preferred that both part (A) and (B) comprise a solvent, preferably water.

Part (B) of the antireflective coating composition precursor comprises at least one metal salt. Including at least one metal salt into said part (B) of the precursor was found to enhance the hydrolytic stability of the coating obtained therefrom without impacting the homogeneity and shelf-life of the precursor. Preferably, the metal salt is selected from metal nitrides, nitrates, chlorides, bromides, sulfonates and phosphates, preferably metal chlorides, phosphates and nitrates. Particularly preferred are metal nitrates.

It is further preferred that the metal of the at least one metal salt is selected from sodium, lithium, potassium, calcium, iron, aluminium, zinc, titanium, tin, preferably sodium, potassium, calcium, iron and aluminium, more preferably calcium, iron and aluminium.

Preferably, the at least one metal salt is selected from calcium nitrate, iron nitrate, aluminium nitrate, calcium chloride, iron chloride, aluminium chloride, calcium phosphate, iron phosphate, and aluminium phosphate. Particularly preferred are the nitrates.

When the coating composition precursor contains the ingredients in the above ranges and preferred ranges, the effects described herein become particularly pronounced. It is understood that the concentration of the components of coating composition may be adjusted to the particular use when a solvent is used.

Additionally, either or both part (A) and (B) of the coating composition precursor according to the present disclosure may further comprise surfactants, preferably anionic surfactants. Surfactants may improve the wetting of surfaces of substrates, in particular glass, and, particularly, on non-activated surfaces. Preferred are anionic surfactants of the general formula CₙH₂ₙ₋₁SO₃Na, wherein n is 10 to 20, preferably 14 to 16. As an example for a surfactant (f) useful for the coating compositions described herein, Hansanyl OS (10 % solution) available from Hansa Group (CAS-Nr. 68439-57-6) may be named.

An antireflective coating composition can be obtained by combining part (A) and part (B) of said coating composition precursor. Combining part (A) and (B) in order to obtain an antireflective coating composition may be done at convenience of the user in the claimed quantities immediately before the envisaged application on a substrate such a glass or solar glass panel. This has the effect that a long shelf-life of the coating composition precursor is achieved. Moreover, coatings obtained by coating the coating composition on a substrate, preferably glass, may exhibit a combination of optical properties such as antireflective behaviour and mechanical and chemical properties such as mechanical resistance and anti-aging properties.

The coating composition according to the present disclosure may be used for coating surfaces of substrates. Thus, the present disclosure further provides a method for coating a substrate, comprising the steps
(I) providing a substrate having at least one surface;
(II) providing the antireflective coating composition precursor as described herein;
(III) combining part (A) and part (B) of said antireflective coating composition precursor, thereby obtaining an antireflective coating composition;
(IV) coating the substrate on at least one surface with said antireflective coating composition;
(V) curing the coating, thereby obtaining a coated substrate.

Combining parts (A) and (B) of the coating composition in step (III) may be done immediately before step (IV), i.e. application of the coating composition onto the substrate. Combining may be achieved by conventional means well-known in the art, e.g. by combining both parts in a vessel, preferably followed by mixing. The coating composition may be applied in step (IV) by any known process of wet coating deposition such as spin coating, dip coating, spray coating, flow coating, meniscus coating, knife coating, capillary coating and roll coating. Thus, application may be carried out using e.g. a Meyer bar, a brush, spraying, dip-coating, kiss-coating, roller bar or knife, dependent on the substrate, the scale (i.e. the area to be coated) and other factors. For example, coating substrates on large scales in a factory may offer completely different possibilities than, for example, coating the surfaces of solar panels already installed on a site or coating the outer or inner surfaces of glass panels of a green house, as the skilled person will appreciate. Thus, coating of the substrate in step (IV) may be carried out by means of a paint brush, knife, spraying device or roller bar when on-site application on already installed solar panels or in greenhouse panel is carried out. This means that application may be carried out in an easy, safe and convenient manner, preferably even by untrained personnel. For coating in step (IV), it is preferred that the coating compositions used in the method described herein comprise as solvent as described above. The thickness of the coating applied in step (IV) may be adapted to the envisaged use of the coated substrate, however, it is strongly preferred that coating is carried out at least to a thickness necessary to provide at least certain antireflective properties to the substrate. For example, the coating composition may be applied to a wet film thickness in the range of from 1 to 300 µm, preferably of from 5 to 200 µm, more preferably of from 10 to 100 µm. With regard to the dry film thickness, it is preferred to obtain thicknesses of the coating in the range of from 5 to 300 nm, preferably in the range of from 10 to 180 nm, more preferably in the range of from 15 to 130 nm. The skilled person will appreciate that while low dry film thicknesses (e.g. in the range of from 5 to 50 nm) are sufficient to obtain a coating exhibiting hydrophilic properties giving rise to e.g. anti-soiling effects, optimum dry film thicknesses for obtaining desirable optical properties such as antireflective effects are in the range of from 70 to 150 nm, preferably in the range of from 80 to 120 nm.

Substrates used in the method according to the present disclosure have at least one surface which may be coated with the coating composition. Since the coating obtained in the method has antireflective properties, the skilled person will appreciate that substrates are selected for which antireflective properties are desirable. In this regard, it is preferred that the substrate is selected from polymeric materials, glass, metal, wood, ceramics, preferably glass and metal, more preferably glass and ceramics, even more preferably glass. Glass is particularly preferred since the coating obtained, due to its antireflective properties, may lead to an increase of the transmission of light, in particular visible light through glass, in particular glass films, panels or sheets. Glass may be coloured or tinted, however, in most cases uncoloured glass is preferred since a maximum of light transmission through the substrate is desired. Metal substrates may be useful for applications in the automotive industry or for the manufacture of panels or sheets for applications in house constructions. Ceramics may be useful for the same applications as metal substrates. With regard to metal, wood and ceramic materials, the optical properties of the coating obtained according to the present disclosure are of lower importance, however, the hydrophilic properties of the coating as described herein may provide metal, wood and ceramic substrates with desirable anti-soiling properties. The same applies to polymeric materials. With regard to polymeric materials, materials which exhibit good light transmitting properties are preferred. Applications of a polymeric substrate coated on at least one surface may include visors of helmets, windshields or windows of vehicles such as cars, airplanes, helicopters, trains, ships or boats, screens of televisions, computers, mobile phones, displays and windows of buildings. The substrate may have any form, provided it has at least one surface, for which any one of antireflective, hydrophilic and anti-soiling properties are desired. That is, substrate forms may include shaped articles, sheets, films and panels. Preferred forms are sheets, films and panels, in particular glass sheets, films and panels, which are particularly useful for applications in solar panels and green houses.

In step (V), the coating obtained by coating at least one surface of the substrate with the coating composition described herein is tempered. Curing may be carried out by any means known in the art, for example by exposing the object to elevated temperatures and/or application of a stream of air, preferably dry air. Curing may be carried out following a period of time in which the coating was allowed to dry under ambient conditions. That is, curing may preferably be carried out at a temperature in the range of from 50 to 900 °C, preferably in the range of from 400 to 800 °C, and more preferably in the range of from 550 to 700 °C. The coating compositions may dry under ambient conditions, i.e. ambient temperatures, and a coating of sufficient mechanical and/or antireflective and/or hydrophilic properties is obtained by curing at the above-mentioned elevated temperatures. With regard to the curing times, it is understood that the time required to obtain a fully tempered and/or cured coating are correlated with the temperatures applied.

The coating composition can be coated to a substrate, whereas the coated substrate is not part of the present invention, the coated substrate comprising a substrate and a coating on at least one of the surface of the substrate, the coating obtained from a composition according to the present disclosure or by a method according to the present disclosure. With regard to the substrate, the coating composition and the method, it is understood that the aforementioned substrates, coating compositions and methods described herein apply.

In particular, it is preferred that the substrate is a panel, sheet, shaped article of a film. Due to its properties, it is further preferred that the coated substrate is part of a solar panel, a display, a window, a windshield, a visor or a green house.

The coating of the coated substrate described herein may exhibit certain antireflective, hydrophilic and/or mechanical properties. Antireflective properties as considered herein give rise to another effect, i.e. an increase in transmission of light through a substrate, e.g. a float glass panel. Transmission performance as considered is according to ASTM D-1003 or DIN EN 9050 (issued 2003). Preferably, the coating exhibits a dT of at least 1.0 %, preferably at least 1.4 %, more preferably at least 1.8 %, and even more preferably at least 2.0 % according to DIN EN 9050. This has the effect that the transmission of light through e.g. a float glass panel used in solar panels or green houses may be increased by at least 2 %. An increase in light transmission in this magnitude means a considerable improvement for applications where light is directly translated into energy, plant growth or is otherwise exploited. For instance, the output of a solar panel module may be increased by 2 to 3 %. Similarly, the productivity in the production of plants directly depends on the supply of daylight. Therefore, a high optical transparency of a covering window, ceiling or wall panel of a greenhouse is of great importance. For instance, an increase of light transmission through the ceiling and wall panels of a greenhouse by 2 % may directly translate into an increase of the crop yield of said greenhouse by 2 % such as in the case of tomatoes, which is considered a significant improvement. Moreover, the coating of the coated substrate described herein may exhibit hydrophilic properties. In this regard, it is preferred that the coating exhibits a static water contact angle according to ISO 14989 (issued 2004) of 20 ° or less, preferably of 10 ° or less, more preferably of 7 ° or less, even more preferably of 5 ° or less. This has the effect that upon precipitation of moisture on the coating, a wetting of the surface instead of water drop formation may occur. This will give rise to several effects important for a variety of applications. For instance, the light transmission through e.g. a glass panel may be impaired by light scattering from the formation of water drops. Thus, the hydrophilic coating as described herein may have the advantage that wetting of its surface instead may occur so that formation of water drops and consequently loss of light transmission by scattering may be avoided to a certain extent. This is particularly important for the same applications mentioned above, in particular solar panels and greenhouse panels. In this regard, it is preferred that the coated substrate is a glass panel which is coated on at least one base pane, which would then form the outer surface of the panel (e.g. the outside surface of the solar panel and greenhouse panel, respectively).

The coated substrate may be coated on two opposite faces of the substrate. In this regard, it is particularly preferred that the coated substrate is a glass panel, film or sheet which is coated on its two opposite base panes. Again, this is particularly useful for applications in a greenhouse. For example, if moisture precipitates in the form of drops on the lower side of a ceiling panel or window of a greenhouse, the drops may fall in an uncontrolled manner down to the plants below. Thus, the plants become wet, which is generally not desired in a greenhouse. Hence, when the lower side (i.e. the "inside") of a glass panel forming the ceiling panel or ceiling window of a greenhouse is coated with the coating described herein, formation of water drops on the greenhouse ceiling may be avoided. As result of the wetting of the coating surface, a large surface of the ceiling panel becomes wet upon precipitation of moisture, so that the precipitating moisture runs along the panel surface and may be subsequently drained in a controlled manner. Thus, when the coating according to the present disclosure is present on the inside of the greenhouse, both increase of light transmission and avoiding of uncontrolled drop formation may be achieved, which is particularly advantageous.

Moreover, the coating of the coated substrate according to the present disclosure may exhibit advantageous mechanical properties in terms of abrasion resistance according to DIN EN 1096-2 (issued 2012). In particular, abrasion tests may be performed according to the aforementioned norm by employing a force of 10 N and a velocity of 60 cycles/min, deionized water and 3M High Performance Microfiber Wipe 2010 and using 3000 cycles. It is preferred that a coated glass substrate exhibits a drop of dT according to DIN EN 9050 (issued 2003) of less than 1 % after the abrasion test conditions above.

Similarly, the coating of the coated substrate according to the present disclosure may exhibit advantageous properties in terms of resistance to weathering conditions such as according to the Accelerated Weathering Test QUV according to ASTM G154-6 (issued 2012). Similar to the abrasion resistance, the coating of a coated glass substrate as described herein may exhibit a drop of dT according to DIN EN 9050 (issued 2003) of less than 1 %, preferably of less than 0.8 %, more preferably of less than 0.6 %.

Due to the properties of the coating composition and the coated substrate according to the present disclosure, a further aspect of the present disclosure is a use of said coating composition or of said coated substrate for improving the light transmission and/or the hydrophilicity of a solar glass panel, a greenhouse glass panel, a window, or structural glazing of buildings or vehicles.

### Examples

The present disclosure is further described without however wanting to limit the disclosure thereto. The following examples are provided to illustrate certain embodiments but are not meant to be limited in any way. Prior to that some test methods used to characterize materials and their properties will be described.

### Abbreviations:

RT: room temperature
h: hour(s)
min: minute(s)
s: seconds
n.d.: not determined
Ex.: Example
Comp. Ex.: Comparative Example

**Materials used:**

| **Name** | **Composition** | **Availability** |
|---|---|---|
| NALCO 2326 | Silica nanoparticle dispersion (5 mm, sodium stabilized, 15 wt.-% in water) | NALCO |
| NEOREZ R-966 | Aliphatic urethane latex | DSM |
| ALUMINIUM NITRATE | Al(NO₃)₃*9 H₂O 10% in water | SIGMA-ALDRICH |
| KETROL BT | Xanthan gum | CP KELCO |
| Xanthan gum | | JUNGBUNZLAUER |
| ACTICIDE MBS | Biocide | THOR |
| Nitric acid | HNO₃, 1 mol/l | SIGMA-ALDRICH |
| Phosphoric acid | H₃PO₄, 17% solution | SIGMA-ALDRICH |

### Preparation of coating formulations:

Part A and Part B of the two-part coating composition were prepared by mixing the ingredients set forth in table 1 at room temperature in a vessel while stirring for about 1 hour. Prior to coating, part A and Part B were mixed in a ratio 1:1 while stirring for about 5 minutes.

The comparative one-part mixture was prepared by mixing the ingredients set forth in table 1 at room temperature in a vessel while stirring for about 1 hour. This mixture was used as coating composition.

### Application:

The coating compositions were applied as fresh solutions onto textured glass, using a roller coater (wet coating thickness between 2 micrometers and 25 micrometers. After drying at ambient temperature (about 10 min) the coatings were placed in a conventional furnace, heated up to 650°C, kept at this temp for 1 min and cooled down. A convection (fan) furnace can also be used. The coated glass samples were kept at room temperature for one day before testing or use.

### Test methods:

### Accelerated aging

Accelerated aging was done on the individual solutions by storing (200 ml) samples at 65°C during 7 days. The samples were visually inspected. Any formation of precipitate indicated instability of the mixture.

### Dynamic Viscosity:

Viscosity of the mixture as a function of shear rate was measured at 23°C using a viscometer with a cone and plate HC 60 mm, 1° geometry, commercially available as HAAKE® Thermo RheoWin Rheometer, HAAKE, Karlsruhe, Germany. The dynamic viscosity, recorded in mPas, was an average of 3 measurements.

### Brookfield Viscosity:

The Brookfield Viscosity was measured according to DIN ISO 2555, using a spindle 3 at 100 rpm, and is expressed in mPas.

### Transmission Performance:

Total transmittance was measured according to test method ASTM D-1003, using a BYK Haze-Gard Plus analyzer, equipped with a CIE-C light source and available from BYK-Gardner GmBH, The transmission (T) and the transmission increase relative to uncoated glass (dT), recorded in %, are average values of at least 5 separate measurements.

### Pressure Cooker Test Method

The Pressure cooker test provides a means to accelerate aging in an environment of high temperature, pressure, and relative humidity. A Systec DX 45 autoclave available from Systec GmbH was programmed to the relevant temperature / pressure profile. Coated glass samples were placed in the autoclave chamber, exposed to the relevant conditions and further evaluated by transmission measurements and/or wiping with a TouchNTuff NBR 92-600 glove (available from Ansell GmbH) using moderate finger pressure, or with a 3M 34567 Professional Panel Wipe (available from 3M), using moderate force (ca. 4 N). The total transmission was tested according to the transmission performance test method as indicated above.

### Damp Heat (DH) Resistance:

The damp heat resistance test was performed according to IEC 61215. Treated glass plates were put in a climate chamber with 85% relative humidity and a temperature of 85°C during a time as specified in the examples. The transmission was measured according to the transmission performance test method as indicated above.

### Dry Abrasion Test

Dry abrasion test was performed on a Reciprocating Abraser (Model 5900, available from TABER INDUSTRIES). Dry abrasion resistance was tested by employing 1000 double rubs with a force of 4 N and a velocity of 35 cycles/min (1380 g weight). The cloth used for testing was 13.5 Crockmeter cloth (AATCC Crockmeter square, Ø=15mm, 100 % cotton). After abrasion the total transmission was tested according to the transmission performance test method as indicated above.

### Wet Abrasion Test

Wet abrasion tests were performed on a Reciprocating Abraser (Model 5900, available from TABER INDUSTRIES). Wet abrasion resistance was tested by employing 1000 double rubs, using a force of 4 N and a velocity of 35 cycles/min (1380 g weight). Wet abrasion was performed employing deionized water. The cloth used for testing was 3M High Performance Microfiber Wipe 2010. After abrasion the total transmission was tested according to the transmission performance test method as indicated above.

### QUV Test (Accelerated Weathering):

The QUV test was done according to ASTM G154-6 (issued 2012) Cycle 1: 1000h, UV: 0.89 W/cm² at 60 °C; condensation 8 h at 50 °C. Testing device: QLAB model QUV Spray. After exposure the total transmission was tested according to the transmission performance test method as indicated above.

### Thermal Cycle Test

The Thermal Cycle Test was performed according to IEC 61215: 200 cycles, 24days; -40 to +85°C; 20 % RH. After exposure the total transmission was tested according to the transmission performance test method as indicated above.

### Salt Spray Test

The Salt Spray Test was performed according to IEC 61701: 5% aq. NaCl, 96 h. After exposure the samples were cleaned with demineralized water, dried and stored for 24 h at RT and subsequently evaluated by transmission measurements (HazeGard Pro) After exposure the samples were cleaned with demineralized water, dried and stored for 24 h at RT. The total transmission was tested according to the transmission performance test method as indicated above.

### Humidity Freeze Test

The Humidity Freeze Test was performed according to IEC 61215: 85% RH from -40 to +85°C, 10 cycles, 10 days. After exposure the total transmission was tested according to the transmission performance test method as indicated above.

### Composition

**Table 1 Compositions used in the examples and comparative examples, in weight %**

| | PART A | PART B | Comparative composition |
|---|---|---|---|
| Water | 78.21 | 94.29 | 73.83 |
| NALCO 2326 | 17.32 | / | 17.32 |
| NEOREZ-R966 | 1.75 | / | 1.75 |
| Aluminium nitrate | / | 4.35 | 4.38 |
| KELTROL BT | 0.33 | / | 0.33 |
| Xanthane gum | / | 0.49 | / |
| ACTICIDE MBS | 0.20 | 0.20 | 0.20 |
| Phosphoric acid | 2.19 | / | 2.19 |
| Nitric acid | / | 0.67 | / |
| Total weight | 100 | 100 | 100 |
| Theoretical % solids | 3.73 | 0.93 | 4.16 |

### Evaluation of the separate formulations

Formulations PART A and PART B were stable at room temperature for more than 5 months (no precipitate formed), while the comparative formulation showed formation of precipitate already after 2 weeks.

The separate formulations were tested for aging in the accelerated aging test described above. The compositions of PART A and PART B were stable after 7 days at 65°C, whereas the comparative composition turned inhomogeneous with formation of precipitate.

The Brookfield viscosity (measured with spindle 3 at 100rpm) of PART A and PART B remained stable for several weeks as is listed in table 2.

**Table 2 Brookfield viscosity (mPas) of PART A and PART B with time**

| Days | PART A | PART B |
|---|---|---|
| Initial | 96 | 212 |
| 64 | 91 | 197 |
| 83 | 87 | 195 |
| 105 | 81 | 197 |
| 128 | 78 | 187 |

### Examples

### Example 1

Coating compositions according to the examples were prepared by blending PART A and PART B in a ratio 1/1 (also indicated as A/B 1/1). The coating compositions were then applied to the surface of textured glass and dried and cured as described above. The glass samples having an antireflective coating were subjected to a variety of accelerated aging tests. Testing was carried out as further described above. The test results are set forth in tables 4 to 7.

Tables 4 and 5 record the transmission of the coated glass samples, after they have been tested for hydrolytic stability in the pressure cooker test as described above. The data are an average of 5 measurements.

**Table 4 Transmission (%) of glass having an antireflective coating made of a 1/1 blend of PART A / PART B, after Pressure Cooker Test at 131°C, no wiping. Measurement done in time intervals up to 100 hours**

| | Initial | | 23 h | | 45 h | | 68 h | | 100 h | | |
|---|---|---|---|---|---|---|---|---|---|---|---|
| | T | dT | T | dT | T | dT | T | dT | T | dT | T loss |
| A/B 1/1 | 96.50 | 3.15 | 96.24 | 2.89 | 96.15 | 2.81 | 95.98 | 2.63 | 95.70 | 2.35 | 0.99 |

| | | | | | | | | | | | |
|---|---|---|---|---|---|---|---|---|---|---|---|
| Note : Initial transmission of untreated glass : 93.35 %. | | | | | | | | | | | |

**Table 5 Transmission (%) of glass having an antireflective coating made of a 1/1 blend of PART A / PART B, after Pressure Cooker Test at 135°C, for 2.5 hours, including wiping**

| Wipe | Initial T | 2.5 h T | T loss |
|---|---|---|---|
| TouchNTuff NBR 92-600 glove, moderate pressure by finger | 96.54 | 95.6 | 0.83 |
| 3M Professional Panel Wipe, nr 34567 ; moderate force | 96.54 | 96.2 | 0.39 |

In table 6, the transmission data are listed that were measured after glass having an antireflective coating made with the 1/1 blend of PART A and PART B was subjected to dry and wet abrasion according to the method outlined above.

**Table 6 Transmission (%) of glass having an antireflective coating made of a 1/1 blend of PART A / PART B, after dry and wet abrasion**

| Abrasion | Condition | Initial T | T abrasion | T loss |
|---|---|---|---|---|
| Dry | 1000 double rubs, Ø=15mm, 4N, AATCC crockmeter square | 96.24 | 95.70 | 0.54 |
| Wet | 1000 double rubs, Ø=25mm, 4N, 3M High Performance Microfiber Wipe 2010 | 96.52 | 96.14 | 0.38 |

Table 7 records the transmission data that were obtained after the coated glass sample were subjected to the thermal cycle test, the salt spray test, the humidity freeze test and the QUV test. All tests were performed as described above.

**Table 7 Transmission (%) of glass having an antireflective coating made of a 1/1 blend of PART A / PART B, after various accelerated aging tests**

| Test | Condition | Initial T | T after | T loss |
|---|---|---|---|---|
| Thermal Cycle | 201 cycles, 20%RH, 24days; -40 to +85°C | 96.32 | 95.92 | 0.45 |
| Salt Spray | 5% aq. NaCl, 96h ; 4h SST, 4h 23°C / 50% rh, 16h 40°C SW | 96.32 | 96.06 | 0.26 |
| Humidity Freeze | 85+-5%RH from -40 to +85°C, 10 cycles, 10 days | 96.50 | 96.04 | 0.43 |
| QUV | 1000h, UV: 0,89 W/m2, 60°C, 8h, Cond: 50°C, 4h | 96.50 | 96.30 | 0.20 |

As can be concluded from the test results displayed in tables 4 to 7, the antireflective coating made with the 1/1 blend of PART A and PART B showed a transmission decrease of < 1% after accelerated aging in various environments, selected from high or low temperature, high pressure and high or low relative humidity, UV or salt, and independent of the testing conditions.

### Example 2 and comparative examples C-1 and C-2

In example 2, textured glass samples were coated with a composition made of a 1/1 blend of PART A / PART B. In comparative example C-1, textured glass was coated with the freshly made comparative composition of table 1, while in comparative example C-2, textured glass was coated with the same comparative composition, but after it had aged at RT during 30 days. In all cases, coating, drying and curing was done according to the application procedure outlined above.

The coated glass samples were subjected to the Damp Heat resistance test as outlined above. The results of total transmission before and after the test are set forth in table 8.

**Table 8 Transmission (%) of coated glass subjected to the damp heat resistance test**

| | Example 1 | | Comparative C-1 | | Comparative C-2 | |
|---|---|---|---|---|---|---|
| | T | dT | T | dT | T | dT |
| Initial | 96.43 | 3.08 | 96.37 | 3.02 | 96.20 | 2.85 |
| 348 h | 96.11 | 2.76 | 95.71 | 2.36 | 95.68 | 2.33 |
| 524 h | 96.18 | 2.83 | 95.70 | 2.35 | 95.57 | 2.22 |
| 836 h | 96.03 | 2.68 | n.d. | n.d. | n.d. | n.d. |
| 1024 h* | 96.24 | 2.89 | 95.53 | 2.18 | 95.60 | 2.25 |
| 1524 h | 95.95 | 2.60 | n.d. | n.d. | n.d. | n.d. |
| 2024 h | 95.85 | 2.50 | n.d. | n.d. | n.d. | n.d. |

| | | | | | | |
|---|---|---|---|---|---|---|
| Notes : Transmission uncoated glass : 93.35 % 1024 h*: the comparatives C-1 and C-2 were tested after 1000 h instead of 1024 h | | | | | | |

## Claims

1. An antireflective coating composition precursor comprising:
(a) a first part (A) comprising:
(i) silica nanoparticles in an amount in the range of from 50 to 99 wt.-%, preferably in the range of from 70 to 85 wt.-%, relative to the total weight of the solid contents of the first part of the precursor;
(ii) a first acid in such an amount that the first part of the precursor exhibits a pH in the range of from 1.5 to 5.5, preferably in the range of from 2 to 3;
(iii) polymer particles in an amount in the range of from 1 to 50 wt.-%, preferably in the range of from 5 to 30 wt.-% of the solid contents of the first part of the precursor;
(iv) at least one rheology modifier compound in an amount in the range of from 0.01 to 30 wt.-%, preferably in the range of from 2 to 20 wt.-%, relative to the total weight of the solid contents of the first part of the precursor;
(v) water;
(b) a second part (B) comprising:
(i) a second acid in such that the second part of the precursor exhibits a pH in the range of from 1.5 to 5.5, preferably in the range of from 2 to 3;
(ii) at least one metal salt in an amount in the range of from 1 to 40 wt.-%, preferably in the range of from 5 to 20 wt.-%, relative to the total weight of the solid contents of the second part of the precursor;
(iii) at least one rheology modifier compound in an amount in the range of from 0,1 to 30 wt.-%, preferably in from 2 to 20 wt.-%, relative to the total weight of the solid contents of the second part of the precursor;
(iv) water;
wherein the at least one second acid is distinct from the at least one first acid and wherein the ratio of part (A) to part (B) is in the range of from 10:1 to 1:10, preferably in the range of from 5:1 to 1:5, more preferably in the range of from 2:1 to 1:2, even more preferably in the range of from 1.5:1 to 1:1.5.

2. The precursor according to claim 1, wherein the at least one first acid and the at least one second acid are each selected from hydrochloric acid, nitric acid, phosphoric acid, sulfuric acid and sulfonic acid.

3. The precursor according to claim 1 or claim 2, wherein the polymer particles comprise latex particles, preferably urethane latex particles.

4. The precursor according to any one of the preceding claims, wherein the at least one rheology modifier compound is selected from polysaccharides, proteins and polyvinyl alcohols, preferably natural and modified polysaccharides, preferably polysaccharides selected from the list consisting of xanthan, carrageenan, pectin, gellan, diuthan, cellulose ethers such as carboxymethyl cellulose, methyl cellulose, ethyl cellulose and hydroxyethyl cellulose.

5. The precursor according to any one of the preceding claims, wherein the at least one metal salt is selected from metal nitrides, nitrates, chlorides, bromides, sulfonates, and phosphates, preferably metal chlorides, phosphates and nitrates.

6. The precursor according to any one of the preceding claims, wherein the at least one metal salt is selected from calcium nitrate, iron nitrate, aluminium nitrate, calcium chloride, iron chloride, aluminium chloride, calcium phosphate, iron phosphate, and aluminium phosphate.

7. A method for coating a substrate, comprising the steps
(I) providing a substrate having at least one surface;
(II) providing the antireflective coating composition precursor according to any one of claims 1 to 6;
(III) combining part (A) and part (B) of said antireflective coating composition precursor, thereby obtaining an antireflective coating composition;
(IV) coating the substrate on at least one surface with said antireflective coating composition;
(V) curing the coating, thereby obtaining a coated substrate.

8. Method according to claim 7, wherein the substrate is selected from polymeric material, glass, metal, wood, ceramics, preferably glass and metal, more preferably glass and ceramics, even more preferably glass.

9. Use of the antireflective coating composition precursor according to any one of claims 1 to 6 for improving the light transmission and/or the hydrophilicity of a solar glass panel, a greenhouse glass panel, a window, or structural glazing of buildings or vehicles.

## Patentansprüche

1. Vorläufer einer Antireflexbeschichtungszusammensetzung, umfassend:
(a) einen ersten Teil (A), umfassend:
(i) Siliciumdioxid-Nanoteilchen in einer Menge im Bereich von 50 bis 99 Gew.-%, vorzugsweise im Bereich von 70 bis 85 Gew.-%, bezogen auf das Gesamtgewicht des Feststoffgehalts des ersten Teils des Vorläufers;
(ii) eine erste Säure in einer solchen Menge, dass der erste Teil des Vorläufers einen pH-Wert im Bereich von 1,5 bis 5,5, vorzugsweise im Bereich von 2 bis 3 aufweist;
(iii) Polymerteilchen in einer Menge im Bereich von 1 bis 50 Gew.-%, vorzugsweise im Bereich von 5 bis 30 Gew.-% des Feststoffgehalts des ersten Teils des Vorläufers;
(iv) mindestens eine Rheologiemodifikatorverbindung in einer Menge im Bereich von 0,01 bis 30 Gew.-%, vorzugsweise im Bereich von 2 bis 20 Gew.-%, bezogen auf das Gesamtgewicht des Feststoffgehalts des ersten Teils des Vorläufers;
(v) Wasser;
(b) einen zweiten Teil (B), umfassend:
(i) eine zweite Säure derart, dass der zweite Teil des Vorläufers einen pH-Wert im Bereich von 1,5 bis 5,5, vorzugsweise im Bereich von 2 bis 3 aufweist;
(ii) mindestens ein Metallsalz in einer Menge im Bereich von 1 bis 40 Gew.-%, vorzugsweise im Bereich von 5 bis 20 Gew.-%, bezogen auf das Gesamtgewicht des Feststoffgehalts des zweiten Teils des Vorläufers;
(iii) mindestens eine Rheologiemodifikatorverbindung in einer Menge im Bereich von 0,1 bis 30 Gew.-%, vorzugsweise 2 bis 20 Gew.-%, bezogen auf das Gesamtgewicht des Feststoffgehalts des zweiten Teils des Vorläufers;
(iv) Wasser;
wobei sich die mindestens eine zweite Säure von der mindestens einen ersten Säure unterscheidet und wobei das Verhältnis von Teil (A) zu Teil (B) im Bereich von 10:1 bis 1:10, vorzugsweise im Bereich von 5:1 bis 1:5, mehr bevorzugt im Bereich von 2:1 bis 1:2, noch mehr bevorzugt im Bereich von 1,5:1 bis 1:1,5 liegt.

2. Vorläufer nach Anspruch 1, wobei die mindestens eine erste Säure und die mindestens eine zweite Säure jeweils aus Salzsäure, Salpetersäure, Phosphorsäure, Schwefelsäure und Sulfonsäure ausgewählt sind.

3. Vorläufer nach Anspruch 1 oder Anspruch 2, wobei die Polymerteilchen Latexteilchen, vorzugsweise Urethanlatexteilchen, umfassen.

4. Vorläufer nach einem der vorstehenden Ansprüche, wobei die mindestens eine Rheologiemodifikatorverbindung ausgewählt ist aus Polysacchariden, Proteinen und Polyvinylalkoholen, vorzugsweise natürlichen und modifizierten Polysacchariden, vorzugsweise Polysacchariden, ausgewählt aus der Liste, bestehend aus Xanthan, Carrageenan, Pektin, Gellan, Diuthan, Celluloseethern, wie Carboxymethylcellulose, Methylcellulose, Ethylcellulose und Hydroxyethylcellulose.

5. Vorläufer nach einem der vorstehenden Ansprüche, wobei das mindestens eine Metallsalz aus Metallnitriden, -nitraten, -chloriden, -bromiden, -sulfonaten und -phosphaten, vorzugsweise Metallchloriden, -phosphaten und -nitraten ausgewählt ist.

6. Vorläufer nach einem der vorstehenden Ansprüche, wobei das mindestens eine Metallsalz aus Calciumnitrat, Eisennitrat, Aluminiumnitrat, Calciumchlorid, Eisenchlorid, Aluminiumchlorid, Calciumphosphat, Eisenphosphat und Aluminiumphosphat ausgewählt ist.

7. Verfahren zum Beschichten eines Substrats, umfassend die Schritte:
(I) Bereitstellen eines Substrats mit mindestens einer Oberfläche;
(II) Bereitstellen des Vorläufers der Antireflexbeschichtungszusammensetzung nach einem der Ansprüche 1 bis 6;
(III) Kombinieren von Teil (a) und Teil (b) des Vorläufers der Antireflexbeschichtungszusammensetzung, wodurch eine Antireflexbeschichtungszusammensetzung erhalten wird;
(IV) Beschichten des Substrats auf mindestens einer Oberfläche mit der Antireflexbeschichtungszusammensetzung;
(V) Aushärten der Beschichtung, wodurch ein beschichtetes Substrat erhalten wird.

8. Verfahren nach Anspruch 7, wobei das Substrat aus Polymermaterial, Glas, Metall, Holz, Keramik, vorzugsweise Glas und Metall, mehr bevorzugt Glas und Keramik, noch mehr bevorzugt Glas, ausgewählt ist.

9. Verwendung des Vorläufers der Antireflexbeschichtungszusammensetzung nach einem der Ansprüche 1 bis 6 zur Verbesserung der Lichtdurchlässigkeit und/oder der Hydrophilie einer Solarglasplatte, einer Treibhausglasscheibe, eines Fensters oder einer Strukturverglasung von Gebäuden oder Fahrzeugen.

## Revendications

1. Précurseur de composition de revêtement antireflet comprenant :
(a) une première partie (A) comprenant :
(i) des nanoparticules de silice en une quantité dans la plage allant de 50 à 99 % en poids, de préférence dans la plage allant de 70 à 85 % en poids, par rapport au poids total de la teneur en solides de la première partie du précurseur ;
(ii) un premier acide en une quantité telle que la première partie du précurseur présente un pH dans la plage allant de 1,5 à 5,5, de préférence dans la plage allant de 2 à 3 ;
(iii) des particules polymères en une quantité dans la plage allant de 1 à 50 % en poids, de préférence dans la plage allant de 5 à 30 % en poids de la teneur en solides de la première partie du précurseur ;
(iv) au moins un composé modificateur de rhéologie en une quantité dans la plage allant de 0,01 à 30 % en poids, de préférence dans la plage allant de 2 à 20 % en poids, par rapport au poids total de la teneur en solides de la première partie du précurseur ;
(v) de l'eau ;
(b) une deuxième partie (B) comprenant :
(i) un deuxième acide en quantité telle que la deuxième partie du précurseur présente un pH dans la plage allant de 1,5 à 5,5, de préférence dans la plage allant de 2 à 3 ;
(ii) au moins un sel métallique en une quantité dans la plage allant de 1 à 40 % en poids, de préférence dans la plage allant de 5 à 20 % en poids, par rapport au poids total de la teneur en solides de la deuxième partie du précurseur ;
(iii) au moins un composé modificateur de rhéologie en une quantité dans la plage allant de 0,1 à 30 % en poids, de préférence de 2 à 20 % en poids, par rapport au poids total de la teneur en solides de la deuxième partie du précurseur ;
(iv) de l'eau ;
dans lequel l'au moins un deuxième acide est distinct de l'au moins un premier acide et dans lequel le rapport de la partie (A) à la partie (B) est dans la plage allant de 10:1 à 1:10, de préférence dans la plage allant de 5:1 à 1:5, plus préférablement dans la plage allant de 2:1 à 1:2, encore plus préférablement dans la plage allant de 1,5:1 à 1:1,5.

2. Précurseur selon la revendication 1, dans lequel l'au moins un premier acide et l'au moins un deuxième acide sont chacun choisis parmi l'acide chlorhydrique, l'acide nitrique, l'acide phosphorique, l'acide sulfurique et l'acide sulfonique.

3. Précurseur selon la revendication 1 ou la revendication 2, dans lequel les particules polymères comprennent des particules de latex, de préférence des particules d'uréthane-latex.

4. Précurseur selon l'une quelconque des revendications précédentes, dans lequel l'au moins un composé modificateur de rhéologie est choisi parmi des polysaccharides, des protéines et des alcools polyvinyliques, de préférence des polysaccharides naturels et modifiés, de préférence des polysaccharides choisis parmi la liste constituée de xanthane, carraghénane, pectine, gellane, diutane, éthers de cellulose tels que carboxyméthylcellulose, méthylcellulose, éthylcellulose et hydroxyéthylcellulose.

5. Précurseur selon l'une quelconque des revendications précédentes, dans lequel l'au moins un sel métallique est choisi parmi des nitrures, nitrates, chlorures, bromures, sulfonates et phosphates de métal, de préférence des chlorures, phosphates et nitrates de métal.

6. Précurseur selon l'une quelconque des revendications précédentes, dans lequel l'au moins un sel métallique est choisi parmi le nitrate de calcium, le nitrate de fer, le nitrate d'aluminium, le chlorure de calcium, le chlorure de fer, le chlorure d'aluminium, le phosphate de calcium, le phosphate de fer et le phosphate d'aluminium.

7. Procédé pour revêtir un substrat, comprenant les étapes
(I) fourniture d'un substrat ayant au moins une surface ;
(II) fourniture du précurseur de composition de revêtement antireflet selon l'une quelconque des revendications 1 à 6 ;
(III) combinaison de la partie (A) et de la partie (B) dudit précurseur de composition de revêtement antireflet, ce qui permet d'obtenir une composition de revêtement antireflet ;
(IV) revêtement du substrat sur au moins une surface avec ladite composition de revêtement antireflet ;
(V) durcissement du revêtement, ce qui permet d'obtenir un substrat revêtu.

8. Procédé selon la revendication 7, dans lequel le substrat est choisi parmi un matériau polymère, du verre, du métal, du bois, des céramiques, de préférence du verre et du métal, plus préférablement du verre et des céramiques, encore plus préférablement du verre.

9. Utilisation du précurseur de composition de revêtement antireflet selon l'une quelconque des revendications 1 à 6 pour améliorer la transmission lumineuse et/ou l'hydrophilie d'un panneau solaire en verre, d'un panneau en verre de serre, d'une fenêtre ou d'un vitrage structural de bâtiments ou de véhicules.
